# EUROPEAN PATENT APPLICATION

(11) **EP 4 435 900 A1**
(43) Date of publication of application: **25.09.2024**
(21) Application number: 24165671.9
(22) Date of filing: 22.03.2024
(51) Int. Cl.: H01M 4/62, H01M 4/66, H01M 10/0525, H01M 4/36, H01M 4/525, H01M 4/587, H01M 4/02

(54) **ELECTRODE FOR NON-AQUEOUS ELECTROLYTE RECHARGEABLE BATTERY AND NON-AQUEOUS ELECTROLYTE RECHARGEABLE BATTERY**

(30) Priority: 24.03.2023 JP 2023048509
(71) Applicant: Samsung SDI Co., Ltd., Yongin-si, Gyeonggi-do 17084 (KR)
(72) Inventor: TASHIRO, Yuta, Yokohama-shi, 230-0027 (JP); YAMAMOTO, Hidekazu, Yokohama-shi, 230-0027 (JP)
(74) Representative: Michalski Hüttermann & Partner Patentanwälte mbB

(57) **Abstract**

Provided are an electrode for a non-aqueous electrolyte rechargeable battery that has a base layer that can sufficiently suppress separation or peeling of the electrode mixture layer from the current collector after being impregnated with an electrolyte solution while reducing the thickness as much as possible. An electrode for a non-aqueous electrolyte rechargeable battery includes a current collector, an electrode mixture layer, and a conductive base layer between the current collector and the electrode mixture layer, wherein the base layer includes at least a styrene-butadiene copolymer, a carbon material, and poly(meth)acrylic acid, a content of the styrene-butadiene copolymer in the base layer is greater than or equal to about 50 wt% and less than or equal to about 90 wt% based on 100 wt% of the base layer, in the poly(meth)acrylic acid, carboxyl groups included in the poly(meth)acrylic acid are not neutralized, or a proportion of neutralized carboxyl groups among the carboxyl groups neutralized by alkali metal ions is greater than about 0% and less than or equal to about 75%, and a weight per unit area of the electrode mixture layer per one surface of the current collector is greater than or equal to about 10 mg/cm² and less than or equal to about 35 mg/cm².

## Description

### BACKGROUND

### 1. Field

According to one or more embodiments, the present disclosure relates to an electrode for a non-aqueous electrolyte rechargeable battery and a non-aqueous electrolyte rechargeable battery including the electrode.

### 2. Description of the Related Art

Non-aqueous electrolyte rechargeable batteries, including lithium ion rechargeable batteries, are widely utilized as power sources for smart phones, notebook computers, and/or the like. More recently, as these electronic devices have become smaller and lighter, there is an increasing need (or a desire) for rechargeable batteries to have higher energy densities.

In addition, in recent years, the demand (or the desire) for rechargeable batteries to be utilized as a power source for electric vehicles, hybrid vehicles, and/or the like has been increasing, and there is a demand (or a desire) for rechargeable batteries having relatively high energy density to ensure the same performance as comparable gasoline engines.

One example of a method for increasing an energy density of a rechargeable lithium ion battery is to increase a weight per unit area of the electrode mixture layer.

Normally, in the production of an electrode mixture layer, it is common to obtain the electrode mixture layer by coating and drying an electrode mixture slurry onto a current collector foil. However, as the weight per unit area of the electrode mixture layer is increased, a binder is more likely to migrate to the surface of the current collector, and the electrode mixture layer may or is likely to fall off or peel off (e.g., away) from the current collector foil.

Accordingly, in the production of an electrode mixture layer with a large weight per unit area, a method of dry mixing and kneading an electrode mixture composition, forming it into a sheet utilizing a calendar press, and/or the like, and then bonding it to a current collector is also utilized. Here, as a method of preventing or reducing the electrode mixture layer from falling off or peeling off from the current collector, it is being considered to provide a base layer (e.g., a conductive base layer) between the current collector and the electrode mixture layer, as shown in Japanese Patent Publication No. 2020/196372 (Patent Document 1). The entire content of Patent Document 1 is incorporated herein by reference.

### SUMMARY

According to the present inventors' insight and examination, the base layer of a rechargeable battery does not include an electrode active material and does not contribute to increasing the energy density of the rechargeable battery. Therefore, in order to increase energy density (e.g., to realize high energy density), it is required (or there is desire) to make a thickness of the base layer thinner.

In addition, in actual battery configuration, the electrode is impregnated with an electrolyte solution and the electrode is used in a state in which the electrolyte solution is impregnated. The present inventor, who further examined the peeling of the electrode mixture layer from the current collector foil in such actual use situations, found that after being impregnated with the electrolyte solution, the electrode mixture layer is easier to peel from the current collector than in the state before being impregnated with the electrolyte solution. On the other hand, in the above-mentioned Patent Document 1, there is no study at all about the falling off or peeling of the electrode mixture layer after impregnation with the electrolyte solution.

The described technology has been made in view of the above-mentioned problems, and while making a thickness of the base layer as small as possible, an electrode for a non-aqueous electrolyte rechargeable battery has a base layer that can sufficiently prevent the electrode mixture layer from falling off or peeling off from the current collector even after impregnation with an electrolyte solution in which the electrode mixture layer tends to fall off or peel off.

One or more aspects or some embodiments of the present disclosure are as follows.

One or more aspects or embodiments are directed toward an electrode for a non-aqueous electrolyte rechargeable battery, including a current collector, an electrode mixture layer, and a conductive base layer between the current collector and the electrode mixture layer,
wherein the base layer includes at least a styrene-butadiene copolymer, a carbon material, and poly(meth)acrylic acid,
a content of the styrene-butadiene copolymer in the base layer is greater than or equal to about 50 wt% and less than or equal to about 90 wt% based on 100 wt% of the base layer,
in the poly(meth)acrylic acid, carboxyl groups included in the poly(meth)acrylic acid are not neutralized, or a proportion of neutralized carboxyl groups (neutralized by alkali metal ions) among the carboxyl groups is greater than about 0% and less than or equal to about 75%, and
a weight per unit area of the electrode mixture layer per one surface of the current collector is greater than or equal to about 10 mg/cm² and less than or equal to about 35 mg/cm².

In some embodiments, the base layer has a thickness of greater than or equal to about 0.5 µm and less than or equal to about 5 µm.

In some embodiments, the base layer has a thickness of greater than or equal to about 0.5 µm and less than or equal to about 2 µm.

In some embodiments, the styrene-butadiene copolymer has a glass transition temperature of greater than or equal to about -30 °C and less than or equal to about 30 °C.

In some embodiments, the electrode mixture layer includes greater than or equal to about 0.5 wt% and less than or equal to about 10 wt% of polytetrafluoroethylene.

In some embodiments, the carboxyl group in the poly(meth)acrylic acid is not neutralized, or a proportion of the neutralized carboxyl group in the poly(meth)acrylic acid is greater than about 0% and less than or equal to about 50%.

In some embodiments, the carbon material includes at least one furnace black, channel black, thermal black, ketjen black, and acetylene black.

One or more aspects or embodiments are directed toward a non-aqueous electrolyte rechargeable battery comprising a positive electrode, a negative electrode, a separator between the positive electrode and the negative electrode, and an electrolyte, wherein the positive electrode and/or the negative electrode is the electrode for a non-aqueous electrolyte rechargeable battery as described herein.

One or more aspects or embodiments are directed toward a non-aqueous electrolyte rechargeable battery comprising a positive electrode, a negative electrode, a separator between the positive electrode and the negative electrode, and an electrolyte solution, wherein at least one of the positive electrode and the negative electrode is the electrode for a non-aqueous electrolyte rechargeable battery as described herein.

According to the present disclosure, in the electrodes in which a weight per unit area of the electrode mixture layer per one surface of the current collector is sufficiently increased, even if the thickness of the base layer is sufficiently decreased to the range capable of achieving as high energy density as desired, the electrode mixture layer may be suppressed from falling off or peeling off from the current collector after being impregnated with the electrolyte solution.

The present inventors have discovered that the phenomenon that the electrode mixture layer becomes prone to peel off from the current collector after being impregnated with the electrolyte solution is particularly problematic for a negative electrode. Accordingly, the negative electrode for a non-aqueous electrolyte rechargeable battery according to the present disclosure, which is used to manufacture a non-aqueous electrolyte rechargeable battery, may be expected to more significantly exhibit the effects of the present disclosure. Additional aspects will be set forth in part in the description which follows and, in part, will be apparent from the description, or may be learned by practice of the presented embodiments of the disclosure.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of one or more of the associated listed items. Expressions such as "at least one of," if (e.g., when) preceding a list of elements, modify the entire list of elements and do not modify the individual elements of the list. As the present disclosure described hereinafter allows for one or more suitable changes and numerous embodiments, embodiments will be illustrated in the drawings and described in more detail in the detailed description.

Hereinafter, embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise. Unless otherwise defined, all chemical names, technical and scientific terms, and terms defined in common dictionaries should be interpreted as having meanings consistent with the context of the related art, and should not be interpreted in an ideal or overly formal sense. It will be understood that, although the terms first, second, etc. may be used herein to describe various elements, these elements should not be limited by these terms. These terms are only used to distinguish one element from another element. Thus, a first element could be termed a second element without departing from the teachings of the present disclosure. Similarly, a second element could be termed a first element.

As used herein, the phrase "combination thereof" means a mixture, a laminate, a composite, a copolymer, an alloy, a blend, a reaction product, and the like of the constituents.

As used herein, singular forms such as "a," "an," and "the" are intended to include the plural forms as well, unless the context clearly indicates otherwise. As used herein, the terms "use," "utilizing," and "used" may be considered synonymous with the terms "utilize," "utilizing," and "utilized," respectively. As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Herein, it should be understood that terms such as "comprises," "comprise," "comprising," "includes," "including," "include," "having," "has," or "have" are intended to designate the presence of an embodied feature, number, step, element, or a combination thereof, but it does not preclude the possibility of the presence or addition of one or more other features, number, step, element, or a combination thereof.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item. Spatially relative terms, such as "beneath," "below," "lower," "above," "upper," "bottom," "top," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly. In this context, "consisting essentially of" means that any additional components will not materially affect the chemical, physical, optical or electrical properties of the semiconductor film. Further, in this specification, the phrase "on a plane," or "plan view," means viewing a target portion from the top, and the phrase "on a cross-section" means viewing a cross-section formed by vertically cutting a target portion from the side. In present disclosure, "not include (or not including) a or any "component," "exclude (or excluding) a or any "component," "component-free," and/or the like refers to that the "component" not being added, selected or utilized as a component or compound in the composition, but the "component" of less than a suitable amount may still be included due to other impurities and/or external factors.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

As used herein, poly(meth)acrylic acid refers to polyacrylic acid (PAA) and/or polymethacrylic acid (PMAA).

Hereinafter, a specific configuration of a non-aqueous electrolyte rechargeable battery according to some embodiments will be described.

<1. Basic Configuration of Non-aqueous Electrolyte Rechargeable Battery >

The non-aqueous electrolyte rechargeable battery according to some embodiments is a rechargeable lithium ion battery including a positive electrode, a negative electrode, a separator, and a non-aqueous electrolyte configured to accommodates them therein.

The shape of the rechargeable lithium ion battery is not particularly limited, but may be, for example, a cylindrical shape, a prismatic shape, a laminated shape, or a button shape.

### (1-1. Positive Electrode)

The positive electrode includes a positive electrode current collector and a positive electrode mixture layer on the positive electrode current collector.

The positive electrode current collector may be any material as long as it is a conductor, and is, for example, plate-shaped or thin, and may be desirably made of aluminum, stainless steel, nickel coated steel, or the like.

The positive electrode mixture layer may include at least a positive electrode active material, and may further include a conductive agent and a positive electrode binder.

The positive electrode active material may be, for example, a transition metal oxide or a solid solution oxide including lithium, and is not particularly limited as long as it can electrochemically intercalate and deintercalate lithium ions. Examples of the transition metal oxide including lithium may include Li_{1.0}Ni_{0.88}Co_{0.1}Al_{0.01}Mg_{0.01}O₂, etc. In addition, Li·Co composite oxides such as LiCoO₂ and Li·Ni·Co-Mn-based composite oxides such as LiNiₓCo_{y}Mn_{z}O₂, Li-Ni-based composite oxide such as LiNiO₂, or Li-Mn-based composite oxides such as LiMn₂O₄, and the like. Examples of the solid solution oxide may include LiₐMnₓCo_{y}Ni_{z}O₂ (1.150 ≤ a ≤ 1.430, 0.45 ≤ x ≤ 0.6, 0.10 ≤ y ≤ 0.15, 0.20 ≤ z ≤ 0.28), LiMn_{1.5}Ni_{0.5}O₄. On the other hand, a content (content ratio) of the positive electrode active material is not particularly limited, as long as it is applicable to the positive electrode mixture layer of a non-aqueous electrolyte rechargeable battery. Moreover, these compounds may be used alone or may be used in mixture of plural types.

The conductive agent is not particularly limited as long as it is for increasing the conductivity of the positive electrode. Specific examples of the conductive agent include those containing one or more types selected from carbon black, natural graphite, artificial graphite, fibrous carbon, and nanocarbon materials.

Examples of the carbon black may include furnace black, channel black, thermal black, ketjen black, and acetylene black.

Examples of the fibrous carbon may include carbon fibers and the like.

Examples of the nanocarbon material may include carbon nanotubes, carbon nanofibers, single-layer graphene, and multi-layer graphene.

The content of the conductive agent is not particularly limited, and may be any content applicable to the positive electrode mixture layer of a non-aqueous electrolyte rechargeable battery.

The positive electrode binder may be, for example, a fluorine-containing resin such as polytetrafluoroethylene (PTFE) and polyvinylidene fluoride, an ethylene-containing resin such as a styrene-butadiene rubber, and ethylene propylene-diene terpolymer, an acrylonitile-butadiene rubber, a fluororubber, polyvinyl acetate, polymethylmethacrylate, polyethylene, polyvinyl alcohol, carboxymethyl cellulose, a carboxymethylcellulose derivative (a salt of carboxymethylcellulose, and the like), nitrocellulose, and the like. The positive electrode binder is not particularly limited as long as it is capable of binding the positive electrode active material and the conductive agent to the positive electrode current collector. From the viewpoint of increasing a weight per unit area of the positive electrode mixture layer, it is desirable that the positive electrode mixture layer includes a fluorine-containing resin such as polytetrafluoroethylene (PTFE) or polyvinylidene fluoride as a binder, and a binder content in the positive electrode mixture layer is greater than or equal to about 0.5 parts by weight (that is, wt%) and less than or equal to about 10 parts by weight (that is, wt%). If the binder content is within this range, a mechanical strength of the positive electrode mixture layer is improved to a level that can ensure good processability, and the energy density of the positive electrode plate can be increased.

### (1-2. Negative Electrode)

The negative electrode includes a negative electrode current collector and a negative electrode mixture layer on the negative electrode current collector.

The negative electrode current collector may be anything as long as it is a conductor, and may be desirably plate-shaped or thin, and made of copper, stainless steel, nickel-plated steel, or the like.

The negative electrode mixture layer may include at least a negative electrode active material and may further include a conductive agent and a negative electrode binder.

The negative electrode active material is not particularly limited as long as it can electrochemically intercalate and deintercalate lithium ions, but, may be, for example, a graphite active material (artificial graphite, natural graphite, a mixture of artificial graphite and natural graphite, natural graphite coated with artificial graphite), a Si-based active material, or a Sn-based active material (e.g., a mixture of fine particles of silicon (Si) or tin (Sn) or a mixture of oxides thereof and a graphite active material, particulates of silicon or tin, an alloy including silicon or tin as a base material), metallic lithium, and a titanium oxide compound such as Li₄Ti₅O₁₂, lithium nitride, and the like. As the negative electrode active material, one of the above examples may be used, or two or more types may be used in combination. On the other hand, oxides of silicon may be represented by SiOₓ (0 < x ≤ 2).

The conductive agent is not particularly limited as long as it is for increasing the conductivity of the negative electrode, and for example, the same conductive agent as described in the section of the positive electrode may be used.

The negative electrode binder is not particularly limited as long as it is capable of binding the negative electrode active material and the conductive agent to the negative electrode current collector. The negative electrode binder may be, for example, polyvinylidene difluoride (PVDF), polytetrafluoroethylene (PTFE), polyacrylic acid (PAA), polymethacrylic acid (PMAA), a styrene-butadiene-based copolymer (SBR), and a metal salt of carboxymethyl cellulose (CMC), and the like. One type of binder may be used alone, or two or more types may be included.

### (1-3. Separator)

The separator is not particularly limited, and any separator may be used as long as it is used as a separator for a rechargeable lithium ion battery. The separator may be a porous film, nonwoven fabric, or the like that exhibits excellent high-rate discharge performance alone or in combination. The resin constituting the separator may be, for example, a polyolefin-based resin such as polyethylene, polypropylene, etc., a polyester resin such as polyethylene terephthalate, polybutylene terephthalate, etc., polyvinylidene difluoride, a vinylidene difluoride-hexafluoropropylene copolymer, a vinylidene difluoride-perfluorovinyl ether copolymer, a vinylidene difluoride-tetrafluoroethylene copolymer, a vinylidene difluoride-trifluoroethylene copolymer, a vinylidene difluoride-hexafluoroacetone copolymer, a vinylidene difluoride-ethylene copolymer, a vinylidene difluoride-propylene copolymer, a vinylidene difluoride-trifluoro propylene copolymer, a vinylidene difluoride- hexafluoroethylene copolymer, a vinylidene difluoride-ethylene-tetrafluoroethylene copolymer, or the like. On the other hand, a porosity of the separator is not particularly limited, and it is possible to arbitrarily apply a porosity of the separator of a conventional rechargeable lithium ion battery.

On the surface of the separator, there may be a heat resistant layer including inorganic particles to improve heat resistance, or a layer including an adhesive for fixing the battery element by adhering to the electrode. The aforementioned inorganic particles may include Al₂O₃, AIOOH, Mg(OH)₂, SiO₂, and the like. Examples of the adhesive may include a vinylidene fluoride-hexafluoropropylene copolymer, an acid-modified product of vinylidene fluoride polymers, and a styrene-(meth)acrylic acid ester copolymer.

### (1-4. Non-aqueous Electrolyte)

As the non-aqueous electrolyte solution, the same non-aqueous electrolyte solution that has conventionally been used for rechargeable lithium ion batteries may be used without particular limitation. The non-aqueous electrolyte solution has a composition in which an electrolyte salt is included in a non-aqueous solvent, which is a solvent for the electrolyte solution. Examples of the non-aqueous solvent may include cyclic carbonate esters such as propylene carbonate, ethylene carbonate, butylene carbonate, chloroethylene carbonate, fluoroethylene carbonate, and vinylene carbonate, cyclic esters such as γ-butyrolactone and γ-valerolactone, chain carbonates such as dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more. On the other hand, if two or more types of non-aqueous solvents are mixed and used, a mixing ratio of each non-aqueous solvent may be a mixing ratio that may be used in a conventional rechargeable lithium ion battery.

Examples of the electrolyte salt may include an inorganic ion salt including one of lithium (Li), sodium (Na) or potassium (K) such as LiClO₄, LiBF₄, LiAsFs, LiPFs, LiPF₆₋ₓ(CₙF₂ₙ₊₁)ₓ [provided that 1<x<6 and n=1 or 2], LiSCN, LiBr, Lil, Li₂SO₄, Li₂B₁₀Cl₁₀, NaClO₄, Nal, NaSCN, NaBr, KClO₄, KSCN, or an organic ion salt such as LiCF₃SO₃, LiN(CF₃SO₂)₂, LiN(C₂F₅SO₂)₂, LiN(CF₃SO₂)(C₄F₉SO₂), LiC(CF₃SO₂)₃, LiC(C₂F₅SO₂)₃, (CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate, (C₂H₅)₄N-phthalate, lithium stearyl sulfonate, lithium octyl sulfonate, lithium dodecylbenzene sulfonate, and the like, and it is also possible to use these ionic compounds alone or in a mixture of two or more types. Meanwhile, a concentration of the electrolyte salt may be the same as that of a non-aqueous electrolyte solution used in a conventional rechargeable lithium ion battery, and is not particularly limited. In the present embodiment, it is desirable to use a non-aqueous electrolyte solution including the above-described lithium compound (electrolyte salt) at a concentration of greater than or equal to about 0.8 mol/L and less than or equal to about 1.5 mol/L.

Meanwhile, various additives may be added to the non-aqueous electrolyte solution. Examples of such additives may include negative electrode-acting additives, positive electrode-acting additives, ester additives, carbonate ester additives, sulfuric acid ester additives, phosphoric acid ester additives, boric acid ester additives, acid anhydride additives, and electrolyte additives. Any one of these may be added to the non-aqueous electrolyte solution, and multiple types of additives may be added to the non-aqueous electrolyte solution.

### <2. Characteristic Configuration of Non-aqueous Electrolyte Rechargeable Battery According to The Present Embodiment >

Hereinafter, the characteristic configuration of the non-aqueous electrolyte rechargeable battery according to some embodiments will be described.

### (2-1. Base Layer)

The aforementioned negative electrode further includes a base layer.

The base layer is provided between the negative electrode current collector and the negative electrode mixture layer, and prevents the negative electrode mixture layer from falling off or peeling off.

The base layer includes a carbon material, a binder (binder for base layer), and a dispersant.

The carbon material is not particularly limited as long as it is used to increase the conductivity of the base layer. Examples of the carbon material may include those containing one or more types selected from carbon black, natural graphite, artificial graphite, fibrous carbon, and nanocarbon materials.

Examples of the carbon black may include furnace black, channel black, thermal black, ketjen black, and acetylene black.

Examples of the fibrous carbon include carbon fiber and the like.

Examples of the nanocarbon material may include carbon nanotubes, carbon nanofibers, single-layer graphene, and multi-layer graphene.

Among carbon materials, it is desirable to use carbon black, which is easy to disperse. Among carbon blacks, it is more desirable to use acetylene black, which has high conductivity.

A content of the carbon material in the base layer may be greater than or equal to about 1 wt% and less than or equal to about 35 wt%, and for example greater than or equal to about 5 wt% and less than or equal to about 30 wt%. If the content of the carbon material is greater than or equal to about 1 wt%, the conductivity of the base layer becomes good, and if the content of the carbon material is greater than or equal to about 5 wt%, the conductivity of the base layer becomes better.

On the other hand, lowering the content of the carbon material leaves room for increasing the content of the binder and dispersant for the aforementioned base layer, which leads to the development of good adhesiveness and improved dispersibility of the base layer. Accordingly, the content of the carbon material may be less than or equal to about 35 wt%, or less than or equal to about 30 wt%.

The binder for the base layer binds each component, such as a carbon material included in the base layer, to each other and also binds the base layer and the electrode current collector or the electrode mixture layer. For example, the binder for the base layer according to the present embodiment includes a styrene-butadiene copolymer (also referred to as SBR), and may be made of a styrene-butadiene copolymer.

The styrene-butadiene copolymer is a copolymer mainly composed of structural units made by polymerizing styrene and butadiene. In the binding the base layer with the electrode current collector or the electrode mixture layer, as the binder for a base layer is softened, an adhesive force is expressed. Herein, a temperature that the styrene-butadiene copolymer is softened is, that is, a glass transition temperature. The glass transition temperature of the styrene-butadiene copolymer is in general lower than that (a melting point: about 177 °C) of a fluorine resin such as PVDF and the like and thereby, may reduce a temperature of an adhesive process, which may be advantageous in terms of reducing a manufacturing coat.

The styrene-butadiene copolymer includes emulsion polymerization SBR and solution polymerization SBR. The emulsion polymerization SBR is obtained in a state of aqueous dispersion (also, called to be emulsion or latex). When SBR is synthesized through the emulsion polymerization, an emulsifier may be sometimes prescribed. In order to disperse and stabilize SBR particulates, a small portion of them may be modified with monomers such as unsaturated carboxylic acid, an unsaturated nitrile compound, and the like. In order to disperse and stabilize the SBR particulates in water, a surfactant may be added thereto. The SBR particulates may be complexed with different types of polymers. The complexed SBR particulates may have a structure such as a core-shell structure, a sea-island structure, and the like.

In the present embodiments, it is desirable that an aqueous dispersion of the emulsion polymerized styrene-butadiene copolymer is used as a binder for a base layer. The styrene-butadiene copolymer has low viscosity in the aqueous dispersion state. The binder for a base layer with low viscosity may contribute to deteriorating viscosity of slurry for a base layer. The slurry for a base layer with low viscosity may be advantageous in terms of coating a thin film. The emulsion polymerized styrene-butadiene copolymer has, for example, a relatively large molecular weight of greater than or equal to about 10,000 and less than or equal to about 3,000,000. The binder for a base layer with a large molecular weight may contribute to increasing strength of the binder for a base layer itself and in turn, increasing strength of the base layer. The base layer with high strength may contribute to lowering a defect rate of a coating film.

As described above, the aqueous dispersion of the styrene-butadiene copolymer may include additives such as the emulsifier and the surfactant. In addition, a small portion thereof may be modified with monomers such as unsaturated carboxylic acid, an unsaturated nitrile compound, or the like. The additives or the modification may affect pH of the aqueous dispersion of the styrene-butadiene copolymer.

When the binder for a base layer is mixed with other materials except for the binder for a base layer to prepare slurry for a base layer, the aqueous dispersion of the binder for a base layer should have a desirable pH range. For example, if pH of the other materials except for the binder for a base layer is less than about 7, when the binder for a base layer is not strongly alkaline but alkaline close to neutral, desirably, neutral or acidic, the slurry for a base layer may be suppressed from formation of aggregates due to acid-base interaction. If the formation of aggregates is suppressed in the slurry for a base layer, a base layer formed by coating the slurry for a base layer may be suppressed from deterioration of coating property.

In the embodiments, poly(meth)acrylic acid is used as a dispersant for a base layer, which will be described later. An aqueous solution of the poly(meth)acrylic acid has pH of less than about 7. In order to suppress the formation of aggregates through the aforementioned mechanism, it is desirable to use a binder for a base layer with pH of less than or equal to 8.

The styrene-butadiene copolymer may desirably have a glass transition temperature of less than or equal to about 30 °C and more than or equal to about -30 °C. The styrene-butadiene copolymer is softened at a higher temperature than the glass transition temperature. The styrene-butadiene copolymer, when sufficiently softened, may express satisfactory adhesiveness in a process of adhering the negative electrode mixture layer to the base layer. If the glass transition temperature is less than or equal to about 30 °C, when the negative electrode mixture layer is adhered to the base layer, satisfactory adhesiveness may be obtained without setting a heat roll press at an excessively high temperature, for example, at greater than about 120 °C. The glass transition temperature of the styrene-butadiene copolymer may be more desirably greater than or equal to about -20 °C and less than or equal to about 20 °C and much more desirably, greater than or equal to about -15 °C and less than or equal to about 15 °C.

The styrene-butadiene copolymer, which is in a dried state, if impregnated with an electrolyte solution, may absorb the electrolyte solution and swells. However, an excessively high swelling degree may contribute to deteriorating adhesion strength between electrode mixture layer and base layer. Accordingly, the styrene-butadiene copolymer may desirably have a swelling degree of less than about 278 wt%. The swelling degree may be more desirably less than or equal to about 200 wt%, and much more desirably less than or equal to about 150 wt%.

Specific examples of the styrene-butadiene copolymer satisfying the aforementioned properties may include, for example, TRD2001, TRD102A, and TRD104A, which are manufactured by ENEOS INC., BM-451B manufactured by Zeon Corp., and the like.

In order to sufficiently prevent the electrode mixture layer from falling off or peeling after being impregnated with the electrolyte solution by the base layer, a content of the binder for the base layer in the base layer may be greater than or equal to about 50 wt%. In addition, in order to sufficiently ensure the conductivity of the base layer, the content of the binder for the base layer in the base layer may be less than or equal to about 90 wt%. The content of the binder for base layer in the base layer may be greater than about 55 wt% and less than or equal to about 85 wt%, greater than or equal to about 60 wt% and less than or equal to about 85 wt%, and for example greater than or equal to about 60 wt% and less than or equal to about 80 wt%.

The dispersant is used to uniformly disperse the carbon material and the binder for the base layer, and in this embodiment, poly(meth)acrylic acid corresponds to this.

The poly(meth)acrylic acid has a plurality of carboxyl groups in the molecule, and these carboxyl groups may be neutralized by alkali metal ions such as sodium ions.

In the poly(meth)acrylic acid used in this embodiment, it is desirable that these carboxyl groups are as unneutralized as possible. For example, a proportion of neutralized carboxyl groups (neutralized carboxyl groups) among the carboxyl groups included in poly(meth)acrylic acid may be less than or equal to about 20%, less than or equal to about 10%, and for example 0% (i.e., unneutralized). That is, a proportion of neutralized carboxyl groups among the carboxyl groups included in the poly(meth)acrylic acid is greater than about 0% and less than or equal to about 75%. For example, a proportion of neutralized carboxyl groups among the carboxyl groups included in the poly(meth)acrylic acid is greater than about 0% and less than or equal to about 50%.

A content of the dispersant in the base layer may be greater than or equal to about 1 wt% and less than or equal to about 30 wt%, and for example greater than or equal to about 2 wt% and less than or equal to about 25 wt%, or greater than or equal to about 3 wt% and less than or equal to about 20 wt%. If the content of the dispersant is greater than or equal to about 1 wt%, the above-described carbon material and the binder for the base layer can be uniformly dispersed, and when the content of the dispersant is greater than or equal to about 2 wt%, they can be dispersed more uniformly. On the other hand, lowering the content of the dispersant leaves room for increasing the content of the aforementioned binder for the base layer and conductive agent, which leads to improved battery performance by developing good adhesiveness of the base layer and lowering the resistance. Accordingly, the content of the dispersant may be less than or equal to about 25 wt%, less than or equal to about 30 wt%, and for example less than or equal to about 25 wt%.

### <3. Manufacturing Method of Non-aqueous Electrolyte Rechargeable Battery According to an Embodiment>

Hereinafter, the manufacturing method of the rechargeable lithium ion battery according to the present embodiment is described.

### (3-1. Manufacturing Method of Positive Electrode)

The positive electrode according to the present embodiment is manufactured as follows.

For example, a positive electrode active material, a conductive agent, and a positive electrode binder are mixed in a desired ratio and kneaded to manufacture a positive electrode mixture lump, and the positive electrode mixture lump is compressed to manufacture a positive electrode mixture sheet. A positive electrode is manufactured by a dry method in which the positive electrode mixture sheet is laminated on a positive electrode current collector using a hot roll press or the like. On the other hand, the manufacturing equipment used in the process of laminating the positive electrode mixture sheet to the positive electrode current collector by a dry method is not particularly limited. As manufacturing equipment used in the process of laminating the positive electrode mixture sheet to the positive electrode current collector, roll press equipment, hot roll press equipment, dry laminator, calendar processing equipment, heat press equipment, etc. may be considered. In the above laminating process, for example, when using a hot roll press equipment, the press roll temperature of the hot roll press equipment can be appropriately changed depending on the material used in the positive electrode mixture layer, etc., but may be greater than or equal to about 20 °C and less than or equal to about 150 °C, greater than or equal to about 30 °C and less than or equal to about 120 °C, and for example greater than or equal to about 40 °C and less than or equal to about 80 °C. Moreover, the rotation speed of the press roll may be greater than or equal to about 0.1 m per minute and less than or equal to about 10 m per minute, greater than or equal to about 0.1 m per minute and less than or equal to about 5 m per minute, and for example greater than or equal to about 0.1 m per minute and less than or equal to about 1.0 m per minute. Various parameters, including the temperature of the press roll and the rotation speed of the press roll, may have different desirable ranges depending on the hot roll press equipment used, and the parameters may be adjusted depending on each hot roll press equipment. When laminating the positive electrode mixture sheets, the weight per unit area of the positive electrode mixture layer on one surface of the positive electrode current collector is adjusted to be greater than or equal to about 15 mg/cm² and less than or equal to about 70 mg/cm². The weight per unit area of the positive electrode mixture layer on one surface of the positive electrode current collector may be greater than or equal to about 25 mg/cm² and less than or equal to about 70 mg/cm², or greater than or equal to about 30 mg/cm² and less than or equal to about 50 mg/cm².

### (3-2. Manufacturing Method of Negative Electrode)

First, each component contained in the aforementioned base layer is suspended in a solvent such as water to prepare a base layer slurry in a slurry state, and this base layer slurry is coated and dried on the negative electrode current collector to form a base layer. Herein, a coating amount of the base layer slurry is such that the thickness of the base layer after drying may be, for example, greater than or equal to about 0.5 µm and less than or equal to about 5 µm. The thickness of the base layer after drying may be greater than or equal to about 0.5 µm and less than or equal to about 2 µm, and for example, greater than or equal to about 0.5 m and less than or equal to about 1.5 µm. Meanwhile, the method of coating is not particularly limited. The coating method may include a knife coater method, a gravure coater method, a reverse roll coater, a slit die coater, and the like. Each of the following coating processes is also performed by the same method.

Next, a negative electrode active material, a conductive agent, and a negative electrode binder are mixed in a desired ratio and kneaded to manufacture a negative electrode mixture lump, and the negative electrode mixture lump is compressed to manufacture a negative electrode mixture sheet. A negative electrode is manufactured by a dry method in which the negative electrode mixture sheet is laminated on the base layer using a hot roll press or the like. On the other hand, the manufacturing equipment used in the process of laminating the negative electrode mixture sheet to the base layer by a dry method is not particularly limited. As manufacturing equipment used in the process of laminating the negative electrode mixture sheet to the base layer, roll press equipment, hot roll press equipment, dry laminator, calendar processing equipment, heat press equipment, etc. may be considered. In the above laminating process, for example, when using a hot roll press equipment, the press roll temperature of the hot roll press equipment can be appropriately changed depending on the material used in the negative electrode mixture layer, etc., but may be greater than or equal to about 20 °C and less than or equal to about 150 °C, greater than or equal to about 40 °C and less than or equal to about 120 °C, and for example greater than or equal to about 60 °C and less than or equal to about 100 °C. Moreover, the rotation speed of the press roll may be greater than or equal to about 0.1 m per minute and less than or equal to about 10 m per minute, greater than or equal to about 0.1 m per minute and less than or equal to about 5 m per minute, and for example greater than or equal to about 0.1 m per minute and less than or equal to about 1.0 m per minute. Various parameters, including the temperature of the press roll and the rotation speed of the press roll, may have different desirable ranges depending on the hot roll press equipment used, and the parameters may be adjusted depending on each hot roll press equipment. When laminating the negative electrode mixture sheets, the weight per unit area of the negative electrode mixture layer on one surface of the negative electrode current collector is adjusted to be greater than or equal to about 10 mg/cm² and less than or equal to about 35 mg/cm².

Additionally, a negative electrode slurry is produced by dispersing the mixed materials constituting the negative electrode mixture layer in a solvent for negative electrode slurry. Next, a negative electrode mixture layer may be formed by coating the negative electrode slurry on the negative electrode current collector and drying it. When forming the negative electrode mixture layer in this way by coating and drying, the negative electrode mixture layer may be compressed using a press machine to achieve the aforementioned density.

### (3-3. Manufacturing Method of Non-aqueous Electrolyte Rechargeable Battery)

Next, an electrode structure is manufactured by placing a separator between the positive electrode and the negative electrode. Then, the electrode structure may be processed into a desired shape (e.g., cylindrical shape, prismatic shape, laminated shape, button shape, etc.) and inserted into a container of the above shape. Subsequently, a non-aqueous electrolyte solution is inserted into the corresponding container to impregnate the electrolyte solution into each pore in the separator or a gap between the positive electrode and negative electrode. Accordingly, a rechargeable lithium ion battery is manufactured.

### <4. Effect of the Present Embodiment>

According to the non-aqueous electrolyte rechargeable battery configured as above, high energy density of the non-aqueous electrolyte rechargeable battery is achieved by increasing the weight per unit area of the negative electrode mixture layer and reducing the thickness of the base layer as much as possible and the negative electrode mixture layer falling off and/or peeling from the negative electrode current collector after impregnation with the electrolyte solution may be sufficiently suppressed.

### <5. Another Embodiment of the Present Disclosure>

The present disclosure is not limited to the aforementioned embodiments.

In the aforementioned embodiment, the case where the base layer is formed only on one surface of the negative electrode current collector has been described, but the base layer and the negative electrode mixture layer may be provided on both (e.g., opposite) surfaces of the negative electrode current collector.

In the above embodiment, the case where the base layer is provided between the negative electrode current collector and the negative electrode mixture layer has been described. However, the base layer according to the present disclosure is installed between the positive electrode current collector and the positive electrode mixture layer, and can prevent the positive electrode mixture layer from falling off or peeling from the positive electrode current collector after impregnation with the electrolyte solution.

The base layer according to the present disclosure is not limited to non-aqueous electrolyte rechargeable batteries that do not have a solid electrolyte layer, but can also be applied to semi-solid rechargeable batteries or all-solid rechargeable batteries that have a solid electrolyte layer.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value. Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

In addition, the present disclosure is not limited to these embodiments but may be variously modified without deviating from the purpose.

### [Examples]

Hereinafter, the present disclosure will be described in more detail according to specific examples. However, the following examples are only one example of the present disclosure, and the present disclosure is not limited to the following examples.

### < Preparation of Base Layer Slurry>

First, after preparing a carbon material dispersion in the following procedure, this carbon material dispersion was used to prepare Base layer Slurries 1 to 5.

### (Preparation of Dispersion 1)

Herein, acetylene black was used as a carbon material, and non-neutralized polyacrylic acid was used as a dispersant. The acetylene black (greater than or equal to 65 g and less than or equal to 75 g), an aqueous solution of the polyacrylic acid (greater than or equal to about 25 g and less than or equal to about 35 g of the polyacrylic acid, as a dried product made by removing water from the aqueous solution), and 1030 g of water were mixed for 20 minutes by using a disperser. The obtained mixture was subject to high-pressure dispersion treatment using NanoVator manufactured by Yoshida Manufacturing Corp. The high-pressure dispersion treatment was three times repeated to obtain Acetylene black dispersion 1. As a result of drying this dispersion at 120 °C in a drying furnace, the dispersion had a dried solid content (solid concentration) of about 8 wt%. On the other hand, even if the contents of the carbon material and the dispersant (polyacrylic acid) were changed within the above ranges, the result in each evaluation test below was not changed.

### (Preparation of Dispersions 2 to 5)

Dispersions 2 to 5 were prepared in the same manner as above, except that the polyacrylic acid used as a dispersant was neutralized by using a sodium hydroxide aqueous solution. The prepared dispersions had a composition shown in Table 1.

Table 1 also shows the pH of polyacrylic acid and each aqueous solution of the neutralized polyacrylic acids used for the dispersions.

**(Table 1)**

| | Dispersant neutralization degree (mol%) | Dispersant pH | Dispersibility |
|---|---|---|---|
| Dispersion 1 | 0 | 2.5 | ○ |
| Dispersion 2 | 10 | 4.2 | ○ |
| Dispersion 3 | 25 | 4.7 | ○ |
| Dispersion 4 | 50 | 5.1 | ○ |
| Dispersion 5 | 75 | 5.77 | ○ |

### <Evaluation of Neutralization Degree of Dispersant>

The neutralization degree of the dispersant in Table 1 was measured as follows. 2 M sodium hydroxide solution was titrated with 100 g/L of the solution of polyacrylic acid or neutralized polyacrylic acid. The neutralization degree was set to 100% when the pH of the solution of polyacrylic acid or neutralized polyacrylic acid which titrated the sodium hydroxide solution becomes 10. The neutralization degree of the solution of the polyacrylic acid or neutralized polyacrylic acid was calculated from an amount of the solution of the polyacrylic acid or neutralized polyacrylic acid until the neutralization degree reached 100%.

### <Evaluation of Dispersibility of Dispersions>

Dispersions 1 to 5 were evaluated with respect to dispersibility by using a grind meter (0 to 50 µm) manufactured by BYK. Whether or not aggregates were formed in the dispersions was checked with naked eyes, if no aggregates were found, o was given, but if aggregates were found, × was given. The results are shown in Table 1.

Referring to Table 1, if a carboxyl group of the polyacrylic acid used as a dispersant of the dispersions was non-neutralized (Dispersion 1) or 75% or less of carboxyl groups thereof were neutralized (Dispersions 2 to 5), the dispersions all turned out to have excellent dispersibility. In general, carbon material with excellent conductivity, which include the acetylene black used as carbon materials in the present embodiments, have high purity and slightly alkaline pH on the particle surface. Accordingly, a dispersant, which has pH of less than 7, is expected to be effectively absorbed onto the surface of the slightly alkaline carbon material surface.

### (Preparation of Base Layer Slurry)

A copolymer (also, called to be SBR) of styrene and butadiene, an acrylic rubber, or polyvinylidene fluoride (also, called to be PVDF) was used as a binder for a base layer, and after preparing the copolymer as an aqueous dispersion of resin particulates by adjusting its dried solid content (solid concentration) to be 40.0 wt%, this aqueous dispersion and the aforementioned Dispersion 1 were added to a stirring container to meet a binder amount contained in a base layer as shown in Table 2. On the other hand, SBR used in this example had a glass transition temperature (measured by DSC (X-DSC7000, Hitachi High Tech Science Corporation) and hereinafter the glass transition temperature was measured in the same manner) of 7 °C, and the acrylic rubber had a glass transition temperature of 15 °C. The stirring container was mounted on a rotation/revolution mixer, ARE-310 manufactured by THYNKY to mix them for 10 minutes, obtaining each base layer slurry with a composition shown in Table 2. As a result of drying and weighing these base layer slurries, the base layer slurries all had a dried solid content (solid concentration) of about 15%.

Subsequently, a negative electrode mixture sheet was manufactured according to the following procedure.

### <Manufacturing of Negative Electrode Mixture Sheet 1>

Powders of natural graphite, artificial graphite, single-layer carbon nanotube, and polytetrafluoroethylene were weighed in a weight ratio of 48.2:48.2:0.1:3.5 and kneaded in a mortar for 10 minutes. After the kneading, a lump-shaped negative electrode mixture was passed between two rolls about 100 times to manufacture a negative electrode mixture sheet with a thickness of about 180 µm and density of 1.2 g/cm³ to 1.4 g/cm³. In the process of passing the lump-shaped negative electrode mixture between the two rolls about 100 times, a gap of the two rolls was gradually narrowed from 3 mm to finally to about 0.1 mm.

In order to adjust density of a negative electrode mixture sheet obtained in the aforementioned method to 1.6 g/cm³ and a weight per unit area of the negative electrode mixture layer to 17 mg/cm², the negative electrode mixture sheet was roll-pressed by a hot roll press. The hot roll press was set at a temperature of 75 °C and a rotation speed of 0.5 m/min. After adjusting the roll gap into 30 µm, the negative electrode mixture sheet formed with a dimension of 3.0 cm×8.0 cm was 3 to 8 times passed in a length direction. In the rolling process, a total pressure was 3 kN, and a linear pressure was 100 kN/m. The manufactured negative electrode mixture sheet was punched to 15.5 ϕ and measured with respect to a weight and a thickness. The obtained weight and thickness were used to calculate negative electrode mixture density and weight per unit area of the negative electrode mixture layer, which were respectively about 1.6 g/cm³ and about 17 mg/cm².

### (Manufacturing of Negative Electrode Mixture Sheet 2)

In the rolling process, the weight per unit area of the negative electrode mixture layer was reduced by increasing the number of times the negative electrode mixture sheet was passed between rolls. In the rolling process, the number of times the negative electrode mixture sheet was passed between the rolls was changed from 25 to 35 to manufacture Negative Electrode Mixture Sheet 2 having a negative electrode mixture density of about 1.6 g/cm³ and a weight per unit area of the negative electrode mixture layer of about 10 mg/cm².

### (Manufacturing of Negative Electrode Mixture Sheet 3)

A plurality of the negative electrode mixture sheets manufactured in the rolling process was overlapped and rolled together to increase the weight per unit area of the negative electrode mixture layer. Two negative electrode mixture sheets having a negative electrode mixture density of about 1.6 g/cm³ and a weight per unit area of the negative electrode mixture layer of about 17.5 mg/cm² were overlapped in a plane direction and then, rolled by changing the roll gap to 60 µm to manufacture Negative Electrode Mixture Sheet 3 having a negative electrode mixture density of about 1.6 g/cm³ and a weight per unit area of the mixture layer of about 35 mg/cm².

Using the base layer slurry and negative electrode mixture sheets manufactured as described above, negative electrodes were manufactured in the following procedure.

### <Manufacturing of Negative Electrode >

### (Example 1)

The base layer slurry was coated to one side of an about 8 µm-thick copper foil (negative electrode current collector). The coating was performed by using a micro gravure coater, and after the coating, drying was performed at 80 °C for 1 minute to form a 1 µm-thick base layer on the negative electrode current collector.

Subsequently, Negative Electrode Mixture Sheet 1 manufactured in the aforementioned method was adhered onto the negative electrode current collector with the base layer with a heat roll press. Heat rolls of the heat roll press were set at a temperature of 80 °C and a rotation speed of 0.5 m/min. After setting a gap between the rolls to be 45 µm, the negative electrode mixture sheet was mounted on the base layer laminated on the current collector and then passed once between the rolls to manufacture a negative electrode. The rotation speed of the rolls used in each example and comparative example could have an error of about ± 0.2 m per minute but had no effect on properties of the manufactured negative electrode mixture sheets. In addition, the roll gaps used in each example and comparative example could have an error of about ±10 µm but had no particular problem. In the adhesion process, a total pressure was 3 kN, and a linear pressure was100 kN/m.

The negative electrodes manufactured in this way was dried at 145 °C for 6 hours in a vacuum-drier. After the vacuum-drying, the negative electrodes were punched to 15.5 ϕ and measured with respect to a weight and a film thickness. The weight and the film thickness were used to calculate negative electrode mixture density and a weight per unit area of the negative electrode mixture layer, which were respectively about 1.6 g/cm³ and about 17.0 mg/cm².

### (Examples 2 to 5 and Comparative Examples 1 to 4)

Negative electrodes for Examples 2 to 5 and Comparative Examples 1 to 4 were manufactured in the same manner as in Example 1, except that the base layer slurries shown in Table 2 were used. The roll gap was adjusted to be a value obtained by the following calculation formula according to a weight per unit area of the used negative electrode mixture sheet (e.g., Negative Electrode Mixture Sheet 1). (Roll gap) = (Weight per unit area of the negative electrode mixture sheet used) ÷ 17 × 45 µm

### < Performance Evaluation Test of Negative Electrode>

### (Method for evaluating the close contacting property of the negative electrode mixture layer to the negative electrode current collector after impregnation with electrolyte solution)

Each of the negative electrodes of Examples 1 to 5 and Comparative Examples 1 to 4 was inserted with an electrolyte solution into an aluminum laminate and then, sealed with a laminator and stored at 60 °C in a thermostat for 3 days. The electrolyte solution was prepared by dissolving 1.15 M of LiPFs and 1.0 wt% of vinylene carbonate in a solvent of ethylene carbonate/dimethyl carbonate/ethylmethyl carbonate mixed in a volume ratio of 20/20/40. Herein, the electrolyte solution was added sufficiently enough to fully immerse the negative electrode, when the negative electrode was stored in the thermostat. After 3 days, the aluminum laminate was taken out from the thermostat and moved into a dry room with a dew point of -30 °C. The aluminum laminate was opened to take out the negative electrode plate, and the electrolyte solution was quickly wiped off therefrom. The negative electrode plate was cut into a rectangular shape with a width of 25 mm and a length of 80 mm. Subsequently, the mixture layer surface of the negative electrode was attached to a stainless steel sheet by using a double-sided adhesive tape to manufacture a sample for evaluating close contacting property. The sample for evaluating close contacting property was mounted on a peeling tester (SHIMAZU EZ-S, Shimadzu Corp.), of which a peeling speed was set to 100 mm/min to measure peel strength with a length 60 mm and an angle of 180 °.

### (Reference for evaluating close contacting property of negative electrode mixture layer with negative electrode current collector after impregnation with electrolyte solution)

When the peel strength was greater than or equal to 2.0 gf/mm, the close contacting property was evaluated as ⊚. When the peel strength was greater than or equal to 1.0 gf/mm and less than 2.0 gf/mm, the close contacting property was evaluated as o, and when less than 1.0 gf/mm, the close contacting property was evaluated as ×. The results are shown in Table 2.

### <Manufacturing of Positive Electrode>

### (Formation of Base Layer)

The base layer slurry used in Example 1 was coated on one side of an about 12 µm-thick aluminum foil (positive electrode current collector). The coating was performed by using a micro gravure coater, and after the coating, drying was performed at 80 °C for 1 minute to form a 1 µm-thick base layer on the positive electrode current collector.

### (Manufacturing of Positive Electrode Mixture Sheet 1)

Powders of LiNi_{0.8}Co_{0.1}Al_{0.1}O₂, acetylene black, and polytetrafluoroethylene were weighed in a weight ratio of 93.0:3.5:3.5 and kneaded in a mortar for 10 minutes. After the kneading, a lump-shaped positive electrode mixture was passed between two rolls about 100 times to manufacture a positive electrode mixture sheet with a film thickness of about 150 µm and density of 2.9 g/cm³ to 3.1 g/cm³. In the process of passing the lump-shaped positive electrode mixture between the two rolls about 100 times, a gap between the two rolls was gradually narrowed from 3 mm to finally about 0.1 mm.

In order to adjust the positive electrode mixture density of the positive electrode mixture sheet obtained in the above method and a weight per unit area of the positive electrode mixture layer respectively to 3.6 g/cm³ and 30.0 mg/cm², the positive electrode mixture sheet was rolled by using a hot roll press. A temperature of the hot roll press was set at 40 °C, and a rotation speed of the rolls was set at 0.5 m/min. After adjusting the roll gap to 10 µm, the positive electrode mixture sheet formed with a dimension of 3.0 cm×8.0 cm was twice passed between the rolls in a length direction. Subsequently, the roll gap was adjusted to 5 µm to pass the positive electrode mixture sheet before passing the positive electrode mixture sheet between the rolls two more times. In the rolling process, a total pressure was 3 kN, and a linear pressure was 100 kN/m. When the manufactured positive electrode mixture sheet was punched to 15.5 ϕ to measure a weight and a film thickness, the film thickness was about 100 µm, positive electrode mixture density was about 3.6 g/cm³, and a weight per unit area of the positive electrode mixture layer was about 30.0 mg/cm².

### (Manufacturing of Positive Electrode Mixture Sheet 2)

In the rolling process, the weight per unit area of the positive electrode mixture layer was reduced by increasing the number of times the positive electrode mixture sheet was passed between the rolls. In the rolling process, the number of times the positive electrode mixture sheet was passed between the rolls was changed from 25 to 35 to manufacture Positive Electrode Mixture Sheet 2 having a positive electrode mixture density of about 3.6 g/cm³ and a weight per unit area of the positive electrode mixture layer of about 18 mg/cm².

### (Manufacturing of Positive Electrode Mixture Sheet 3)

A plurality of the positive electrode mixture sheets manufactured in the rolling process was overlapped and rolled together to increase the weight per unit area of the positive electrode mixture layer. Two positive electrode sheets having mixture density of about 3.6 g/cm³ and a weight per unit area of about 31 mg/cm² were overlapped in a plane direction and then, rolled by changing the roll gap to 60 µm to manufacture Positive Electrode Mixture Sheet 3 having a positive electrode mixture density of about 3.6 g/cm³ and a weight per unit area of the mixture layer of about 62 mg/cm².

### (Adhesion of Positive Electrode Mixture Sheet 1 to Current Collector)

Positive electrode mixture sheet 1 prepared in the above method was adhered by using a hot roll press onto a current collector on which a base layer was formed to manufacture each positive electrode of Examples 1 to 5 and Comparative Examples 1 to 4 shown in Table 2.

First, a temperature of the hot roll press was set at 60 °C, and a rotation speed of the rolls was set at 0.5 m/min. After adjusting the roll gap to 60 µm, each positive electrode mixture sheet was mounted on the base layer coated to be 1 µm thick on the current collector and then passed once between the rolls. On the other hand, the rotation speed of the rolls used in each example and comparative example could have an error of about ± 0.2 m per minute but had no effect on properties of the manufactured positive electrode mixture sheets. In addition, the roll gaps used in each example and comparative example could have an error of about ±10 µm but had no particular problem. In the adhesion process, a total pressure was 3 kN, and a linear pressure was100 kN/m. The positive electrodes manufactured in this way was dried at 80 °C for 6 hours in a vacuum-drier. After the vacuum-drying, the positive electrodes was punched to 15.5 ϕ and measured with respect to a weight and a film thickness. The weight and the film thickness were used to calculate positive electrode mixture density and a weight per unit area of the positive electrode mixture layer, which were respectively about 3.6 g/cm³ and about 30.0 mg/cm².

### (Adhesion of Positive Electrode Mixture Sheets 2 and 3 to Positive Electrode Current Collector)

Positive Electrode Mixture Sheets 2 and 3 were adhered in the same adhesion process as Positive Electrode Mixture Sheet 1 except that the roll gap was changed. The roll gap was adjusted to be a value obtained by the following calculation formula according to a weight per unit area of the used positive electrode mixture sheet. (Roll gap) = (Weight per unit area of the positive electrode mixture sheet used) ÷ 30 × 60 µm

### <Preparation of Rechargeable Battery Cell>

After respectively welding a nickel wire and an aluminum wire to each negative and positive electrode for each of Examples 1 to 5 and Comparative Examples 1 to 4, one sheet of the negative electrode and one sheet of the positive electrode to face each other were laminated with a porous polyethylene separator interposed therebetween to manufacture each electrode laminate. Subsequently, the electrode laminate was housed in an aluminum laminate film with the lead wires externally pulled out, an electrolyte was injected thereinto, and the aluminum laminate film was sealed under a reduced pressure to manufacture a rechargeable battery cell before initial charge. The electrolyte was prepared by dissolving 1.15 M LiPFs and 1.0 wt% of vinylene carbonate in a mixed solvent of ethylene carbonate / dimethyl carbonate / fluoroethylene carbonate in a volume ratio of 20/40/40. On the other hand, rechargeable battery cells of each example and comparative example, in which weights per unit area of the positive and negative electrodes was optimally balanced, were manufactured by respectively using Negative Electrode Mixture Sheet 2 and Positive Electrode Mixture Sheet 2. On the other hand, Negative Electrode Mixture Sheet 2 and Positive Electrode Mixture Sheet 2 in Examples 2-5 and Negative Electrode Mixture Sheet 3 and Positive Electrode Mixture Sheet 3 in Examples 2-6 were respectively used to manufacture rechargeable battery cells, which will be described later.

### <Performance Evaluation of Rechargeable Battery Cells>

### (Aging of Rechargeable Battery Cells)

The rechargeable battery cells manufactured by using each of the negative electrodes according to Examples 1 to 5 and Comparative Examples 1 to 4 were stored at 45 °C for 12 hours before charging and discharging and continuously stored at 25 °C for 24 hours in a thermostat.

### <Charge/Discharge Test of Rechargeable Battery Cells>

The rechargeable battery cells manufactured by using each of the negative electrodes according to Examples 1 to 5 and Comparative Examples 1 to 4 and then, aged in the aforementioned method were connected to a charge and discharge device to perform a charge and discharge test at 25 °C in a thermostat. The initial charge and discharge were performed through a constant current charge at 0.1 CA, a constant voltage charge at 0.05 CA and then, a constant current discharge at 0.1 CA with a charge cut-off voltage of 4.25 V and a discharge cut-off voltage of 2.8 V. The 2^{nd} and 3^{rd} charge and discharge were respectively performed through a constant current charge at 0.2 CA and a constant voltage charge to 0.05 CA and then, a constant current discharge at 0.2 CA with a charge cut-off voltage of 4.25 V and a discharge cut-off voltage of 2.8 V.

### <Rate Capability Evaluation Method>

Full-discharge capacity of the rechargeable battery cells in the above charge and discharge test, which were constant current-charged at 0.33 CA and constant voltage-charged to 0.05 CA and then, constant current-discharged at 0.33 CA with a charge cut-off voltage of 4.25 V and a discharge cut-off voltage of 2.8 V, was set to a state-of-charge (SOC) of 100%

A discharge voltage at SOC 10%, when the cells were constant current-charged at 0.33 CA and constant voltage charged to 0.05 CA and then, constant current-discharged at 2 CA with a charge cut-off voltage of 4.25 V and a discharge cut-off voltage of 2.8 V, was measured to evaluate rate capability. If (e.g., when) the discharge voltage was greater than or equal to 3.8 V at SOC 10% ⊚ was given, if (e.g., when) the discharge voltage was greater than or equal to 3.5 V and less than 3.8 V, o was given, and if (e.g., when) the discharge voltage was less than 3.5 V, × was given. The results are shown in Table 2.

**(Table 2)**

| | Binder for base layer | Binder content in base layer (dried solids, parts by weight) | Neutralizat ion degree of dispersant (mol%) | Close contacting property after impregnatio n with electrolyte solution (gf/mm) | 2 CA dischar ge voltage (V) |
|---|---|---|---|---|---|
| Example 1 | SBR1 | 50 | 0 | ⊚ | ⊚ |
| Example 2 | SBR1 | 60 | 0 | ⊚ | ⊚ |
| Example 3 | SBR1 | 70 | 0 | ⊚ | ⊚ |
| Example 4 | SBR1 | 80 | 0 | ⊚ | ⊚ |
| Example 5 | SBR1 | 90 | 0 | ⊚ | ○ |
| Comparative Example 1 | acrylic rubber | 60 | 0 | × | ⊚ |
| Comparative Example 2 | acrylic rubber | 70 | 0 | × | ⊚ |
| Comparative Example 3 | SBR1 | 40 | 0 | × | ⊚ |
| Comparative Example 4 | PVDF | 60 | 0 | × | ⊚ |

### <Discussion of Evaluation Results>

Referring to the results of Table 2, Examples 1 to 5 having the base layer according to the present disclosure, even if the negative electrode mixture layer had a sufficiently large weight per unit area of 17 mg/cm², and the base layer had a sufficiently small thickness of 1 µm, compared to Comparative Examples 1 and 2 using an acrylic rubber as a binder for a base layer, provided a negative electrode with significantly improved close contacting property after impregnation with an electrolyte solution. The reason for this result is that the base layer included a styrene-butadiene copolymer as a binder and thus suppressed penetration of an electrolyte solution into the base layer and resultantly, reduced a swelling rate, compared to the case of including a conventional acrylic rubber as a binder.

In addition, Examples 1 to 5, compared to Comparative Example 4 using PVDF as a binder, turned out to significantly improve close contacting property after impregnation with an electrolyte solution.

This action mechanism may be sufficiently said that even though the base layer of Examples 1 to 5 was used to a positive electrode, the same effect was achieved.

In addition, although not listed in Table 2, the negative electrode of Examples 1 to 5 exhibited a sufficiently practical value of 3 gf/mm or more for a close-contacting force before impregnation with an electrolyte solution.

Referring to the results of Examples 1 to 5 and Comparative Example 3, when a dried binder included in a base layer was 50 wt% or more, close contacting property after impregnation with an electrolyte solution was sufficiently large. In general, peeling and falling off of the negative electrode mixture layer from the negative electrode current collector after impregnation with an electrolyte solution may cause deterioration of electric capacity of rechargeable battery cells, deterioration of rate performance, and deterioration of cycle-life characteristics. In this respect, the base layer used in Examples 1 to 5, as described above, exhibited sufficiently large close contacting property after impregnation with an electrolyte solution and thus, were advantageous in terms of improving electrical capacity, rate performance, and cycle-life characteristics of rechargeable battery cells.

In addition, referring to the results of Examples 1 to 5, if a base layer had a dried binder content of 90 parts by weight or less, excellent rate capability was achieved. The reason is that the binder content included in the base layer was set at 90 wt% or less to prevent a carbon material from being included in an excessively low amount in the base layer and suppress electrical resistance of the base layer to a sufficiently low level. On the other hand, when a discharge voltage is high during high-rate discharge, energy density of rechargeable battery cells in the high-rate discharge is improved. In this regard, the base layer of Examples 1 to 5, as described above, exhibited sufficiently excellent rate capability and thus was advantageous in terms of improving energy density in the high-rate discharge.

In addition, after coating a base layer with the same composition as in Example 2 to have a thickness of greater than or equal to about 0.5 µm and less than or equal to about 5 µm, the results evaluated in the same procedure as in Example 1 are shown in Table 3. Referring to the results of Table 3, the film thickness was greater than or equal to about 0.5 µm and less than or equal to about 5 µm, which was sufficiently small, and also, sufficiently a large close contacting property after impregnation with an electrolyte solution was obtained. In addition, the film, even if the film thickness was 5 µm, had no influence on rate capability of the cells.

**(Table 3)**

| | Binde r for base layer | Neutralizatio n degree of dispersant (mol%) | Thicknes s of base layer (µm) | Close contacting property after impregnation with electrolyte solution (gf/mm) | 2 CA dischar ge voltage (V) |
|---|---|---|---|---|---|
| Example 2 | SBR1 | 0 | 1 | ⊚ | ⊚ |
| Example 2-2 | SBR1 | 0 | 0.5 | ⊚ | ⊚ |
| Example 2-3 | SBR1 | 0 | 2 | ⊚ | ⊚ |
| Example 2-4 | SBR1 | 0 | 5 | ⊚ | ⊚ |

Table 4 shows the evaluation results by using a base layer with the same composition as in Example 2 but changing a weight per unit area of a negative electrode mixture layer. Referring to Table 4, even though a negative electrode mixture layer had a weight per unit area of greater than or equal to 10 mg/cm² and less than or equal to 35 mg/cm², sufficient close contacting property after impregnation with an electrolyte solution was obtained.

**(Table 4)**

| | Negative electrode mixture layer weight per unit area (mg/cm²) | Close contacting property after impregnation with electrolyte solution (gf/mm) | 2 CA discharge voltage (V) |
|---|---|---|---|
| Example 2 | 17 | ⊚ | ⊚ |
| Example 2-5 | 10 | ⊚ | ⊚ |
| Example 2-6 | 35 | ⊚ | ⊚ |

On the other hand, in Examples 1 to 5, which used a dispersant with a neutralization degree of 50% or less, the dispersant was sufficiently adsorbed in a carbon material to create sufficiently large repulsive force among particles of the carbon material, so that the carbon material might be sufficiently dispersed in base layer slurry. Referring to Table 5, even though the neutralization degree of the dispersant was changed into 10%, 25%, and 50%, a sufficiently close contacting property after impregnation with an electrolyte solution was obtained.

**(Table 5)**

| | Neutralization degree of dispersant (mol%) | Close contacting property after impregnation with electrolyte solution (gf/mm) | 2 CA discharge voltage (V) |
|---|---|---|---|
| Example 2 | 0 | ⊚ | ⊚ |
| Example 2-7 | 10 | ⊚ | ⊚ |
| Example 2-8 | 25 | ⊚ | ⊚ |
| Example 2-9 | 50 | ⊚ | ⊚ |

As for a styrene-butadiene copolymer used as a binder for a base layer, various types of commercially available products may be used, but pH of aqueous dispersions of these styrene-butadiene copolymers was found to a desirable range. Except that types of the aqueous dispersions of the styrene-butadiene copolymers used as a binder for a base layer were changed to one of SBR 2 to 4, slurry for a base layer was prepared in the same manner as in Example 2, and the evaluation results of the dispersions are shown in Table 6. Dispersibility was evaluated using a grind meter (0 to 50 µm) manufactured by BYK. The presence or absence of aggregates in the dispersion was checked with naked eyes, wherein if there were no aggregates, o was given, but if there were aggregates, × was given.

Referring to Table 6, an aqueous dispersion of styrene-butadiene copolymers with pH of 8 or less provided slurry for a base layer with excellent dispersibility. The slurry for a base layer with excellent dispersibility, from which smaller or less aggregates were formed, may be advantageous in terms of forming a base layer to be thin. The thinning of the base layer is advantageous in terms of improving energy density of rechargeable batteries.

**(Table 6)**

| Binder for a base layer | pH | Dispersibility |
|---|---|---|
| SBR1 | 7.8 | ○ |
| SBR2 | 5.8 | ○ |
| SBR3 | 7.5 | ○ |
| SBR4 | 7.9 | ○ |

As for a swelling degree of a styrene-butadiene copolymer used as a binder for a base layer, it was found that there was a preferable range for an electrolyte solution. A slurry for a base layer was prepared in the same manner as in Example 2, except that aqueous dispersion of a styrene-butadiene copolymer with a high swelling degree was used as a binder for a base layer, to evaluate performance.

The results are shown in Table 7. Referring to Table 7, when an aqueous dispersion of the styrene-butadiene copolymer had a small swelling degree of 136 wt%, satisfactory close contacting property after impregnation with an electrolyte solution was obtained. On the other hand, when an aqueous dispersion of the styrene-butadiene copolymer had a large swelling degree of 278 wt%, close contacting property after impregnation with an electrolyte solution was slightly deteriorated, which was still within an allowable range. Referring to the result, a binder for a base layer with a small swelling degree may be used to suppress the binder from penetrating into a base layer and keep the base layer at a small swelling degree and thus maintain rather high close contacting property. And, a swelling degree in Table 7 was examined as follows.

### <Method of Evaluating Swelling Degree of Binder for Base Layer >

Regarding Table 7, an aqueous dispersion of a binder for a base layer was poured into a petri dish made of fluoro resin (e.g., perfluoroalkoxy alkanes (PFA)) and dried to form a binder film for a base layer. The drying was performed at room temperature for 2 days and at 80 °C for 6 hours and then continuously in a vacuum-drying furnace at 80 °C for 6 hours. The obtained film had a thickness of about 1 mm.

The film was cut into a size of 5 mm×5 mm and then, inserted with an electrolyte solution into an aluminum laminate, sealed with a laminator, and stored in a thermostat at 60 °C for 3 days. The electrolyte solution was prepared by dissolving 1.15 M of LiPFs in a mixed solvent of ethylene carbonate/dimethyl carbonate/ethylmethyl carbonate in a volume ratio of 20/20/40. The electrolyte solution, when the film was stored in the thermostat, was used in a sufficient amount enough to fully immerse the film in the electrolyte solution. After 3 days, the aluminum laminate was taken out from the thermostat, the film was taken from the aluminum laminate, and the electrolyte solution was sufficiently and quickly wiped therefrom to measure a weight of the film.

A swelling degree of the binder for a base layer was calculated according to the following equation. Swelling degree (wt%) = weight of film after impregnation with electrolyte solution ÷ weight of a film before impregnation with an electrolyte solution × 100

**(Table 7)**

| | Binder for a base layer | Swelling degree (wt%) | Adhesion after impregnation with electrolyte solution (gf/mm) | 2 CA discharge voltage (V) |
|---|---|---|---|---|
| Example 2 | SBR1 | 136 | ⊚ | ⊚ |
| Example 2-10 | SBR2 | 278 | ○ | ⊚ |

While this disclosure has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. An electrode for a non-aqueous electrolyte rechargeable battery, comprising
a current collector;
an electrode mixture layer; and
a conductive base layer between the current collector and the electrode mixture layer,
wherein the base layer includes at least a styrene-butadiene copolymer, a carbon material, and poly(meth)acrylic acid,
a content of the styrene-butadiene copolymer in the base layer is greater than or equal to about 50 wt% and less than or equal to about 90 wt% based on 100 wt% of the base layer,
in the poly(meth)acrylic acid, carboxyl groups included in the poly(meth)acrylic acid are not neutralized, or a proportion of neutralized carboxyl groups among the carboxyl groups neutralized by alkali metal ions is greater than about 0% and less than or equal to about 75%, and
a weight per unit area of the electrode mixture layer per one surface of the current collector is greater than or equal to about 10 mg/cm² and less than or equal to about 35 mg/cm².

2. The electrode as claimed in claim 1, wherein
the base layer has a thickness of greater than or equal to about 0.5 µm and less than or equal to about 5 µm.

3. The electrode as claimed in claim 1 or 2, wherein
the base layer has a thickness of greater than or equal to about 0.5 µm and less than or equal to about 2 µm.

4. The electrode as claimed in any of the claims 1 to 3, wherein
the styrene-butadiene copolymer has a glass transition temperature of greater than or equal to about -30 °C and less than or equal to about 30 °C.

5. The electrode as claimed in any of the claims 1 to 4, wherein
the electrode mixture layer includes greater than or equal to about 0.5 wt% and less than or equal to about 10 wt% of polytetrafluoroethylene.

6. The electrode as claimed in any of the claims 1 to 5, wherein
the carboxyl group in the poly(meth)acrylic acid is not neutralized, or a proportion of the neutralized carboxyl group in the poly(meth)acrylic acid is greater than about 0% and less than or equal to about 50%.

7. The electrode as claimed in any of the claims 1 to 6, wherein
the carbon material includes at least one of furnace black, channel black, thermal black, ketjen black, and acetylene black.

8. A non-aqueous electrolyte rechargeable battery, comprising
a positive electrode, a negative electrode, a separator between the positive electrode and the negative electrode, and an electrolyte,
wherein the positive electrode and/or the negative electrode is the electrode for a non-aqueous electrolyte rechargeable battery as claimed in any of the claims 1 to 7.

9. A non-aqueous electrolyte rechargeable battery, comprising
a positive electrode, a negative electrode, a separator between the positive electrode and the negative electrode, and an electrolyte solution,
wherein the negative electrode is the electrode for a non-aqueous electrolyte rechargeable battery as claimed in any of the claims 1 to 7.
